Europäisches Patentamt

European Patent Office

Office européen des brevets

(11) Veröffentlichungsnummer: **0 310 079 B1**

# EUROPÄISCHE PATENTSCHRIFT

(45) Veröffentlichungstag der Patentschrift: **19.11.92**

(21) Anmeldenummer: **88116095.6**

(22) Anmeldetag: **29.09.88**

(51) Int. Cl.5: **C08F 8/14**, C08F 216/18,
//(C08F216/18,222:16)

(54) **Verfahren zur Herstellung von Copolymerisaten aus Maleinsäuremonoalkylestern und Vinylalkylethern.**

(30) Priorität: **01.10.87 DE 3733158**

(43) Veröffentlichungstag der Anmeldung:
**05.04.89 Patentblatt 89/14**

(45) Bekanntmachung des Hinweises auf die
Patenterteilung:
**19.11.92 Patentblatt 92/47**

(84) Benannte Vertragsstaaten:
**AT BE CH DE ES FR GB IT LI NL SE**

(56) Entgegenhaltungen:
**US-A- 2 694 697**
**US-A- 2 694 698**
**US-A- 3 499 876**
**US-A- 3 530 102**
**US-A- 3 632 561**

(73) Patentinhaber: **BASF Aktiengesellschaft**
**Carl-Bosch-Strasse 38**
**W-6700 Ludwigshafen(DE)**

(72) Erfinder: **Goertz, Hans-Helmut, Dr.**
**Am Wurmberg 11**
**W-6713 Freinsheim(DE)**
Erfinder: **Straub, Ferdinand, Dr.**
**Ziegelstrasse 20**
**W-6832 Hockenheim(DE)**
Erfinder: **Vogel, Friedrich, Dr.**
**Am Boehlig 13**
**W-6706 Wachenheim(DE)**
Erfinder: **Frosch, Franz, Dr.**
**Lisztstrasse 117**
**W-6700 Ludwigshafen(DE)**
Erfinder: **Naegele, Paul**
**Zanderstrasse 43**
**W-6701 Otterstadt(DE)**
Erfinder: **Raubenheimer, Hans-Juergen**
**Benzstrasse 6**
**W-6834 Ketsch(DE)**

EP 0 310 079 B1

## Beschreibung

Die Erfindung betrifft ein Verfahren zur Herstellung von Copolymerisaten aus Maleinsäuremonoalkylestern und Vinylalkylethern.

Copolymere aus Vinylmethylether und Maleinsäuremonoalkylestern, insbesondere Maleinsäureethylester, Maleinsäure-Isopropylester und Maleinsäurebutylester, finden ausgedehnte Verwendung als filmbildende Harze in Haarsprays. Die Herstellung solcher Substanzen erfolgt üblicherweise derart, daß ein Copolymeres aus Vinylmethylether und Maleinsäureanhydrid mit dem entsprechenden Alkohol zur Reaktion gebracht wird. Beispielsweise ist in der GB-PS 863 379 die Umsetzung eines Maleinsäureanhydrid/Vinylmethylether-Copolymeren mit Methanol, eines Maleinsäureanhydrid/Vinylmethylether-Copolymeren mit Ethanol, eines Maleinsäureanhydrid/Vinylmethylether-Copolymeren mit Isopropanol, eines Maleinsäureanhydrid/Vinylmethylether-Copolymeren mit n-Butanol und eines Maleinsäureanhydrid/Vinylethylether-Copolymeren mit Methanol beschrieben, wobei jeweils das pulverförmige polymere Anhydrid in einem Überschuß des jeweiligen Alkohols bei Raumtemperatur oder erhöhter Temperatur gelöst wird. In der JP-OS 25 982/68 ist die entsprechende Umsetzung mit gasförmigen Alkoholen angegeben. Die GB-PS 1 233 468 beschreibt die gleiche Umsetzung, jedoch in einem inerten Reaktionsmedium, in dem das Polymer nicht löslich ist. In der DE-OS 1 930 009 wird die Umsetzung mit primären Alkoholen in Isopropanol als Lösungsmittel vorgenommen. Allen diesen Verfahren ist jedenfalls gemeinsam, daß als Ausgangsmaterial ein pulverförmiges polymeres Anhydrid, beispielsweise das alternierende Copolymere von Maleinsäureanhydrid und Vinylmethylether eingesetzt wird. Die Gewinnung dieser Anhydride ist ebenfalls bekannt. Bereits in der DE-PS 540 101 ist die Copolymerisation von Maleinsäureanhydrid mit Vinylethern angegeben, beispielsweise die Substanzpolymerisation von Maleinsäureanhydrid mit Vinylethylether. In der GB-PS 712 220 wird ein Verfahren beansprucht, bei dem Maleinsäureanhydrid mit einem Vinylether in einem Lösungsmittel polymerisiert wird. In allen Beispielen wird als Lösungsmittel Benzol angegeben. In der Tat ist Benzol für die Polymerisation von Maleinsäureanhydrid mit Vinylmethylether ideal geeignet. In Benzol läuft diese Polymerisation als Fällungspolymerisation ab, d.h. man erhält eine benzolische Suspension des polymeren Anhydrids, aus dem das Anhydrid durch Trocknung gewonnen werden kann. Aufgrund seiner niedrigen Kettenübertragungskonstante erlaubt Benzol auch die Gewinnung sehr hochmolekularer Produkte. Sehr vorteilhaft ist zudem, daß Benzol leicht wasserfrei zu erhalten ist, was für eine störungsfreie Polymerisation sehr wesentlich ist. Alle diese Vorteile haben dazu geführt, daß die Copolymerisation von Maleinsäureanhydrid mit Vinylmethylether technisch als Fällungspolymerisation in Benzol durchgeführt wird. Die durch Trocknung der erhaltenen Festprodukte enthalten noch bis zu etwa 1 Gew.% Benzol. Die aus solchen Festprodukten erhaltenen Ester enthalten somit auch, wenn auch z.T. geringe Mengen Benzol. Da seit geraumer Zeit bekannt ist, daß Benzol beim Menschen Krebs hervorrufen kann, ist seine Anwesenheit in kosmetischen Produkten, wie z.B. Haarsprays, absolut unerwünscht.

Die US-A-2 694 698 und die US-A-2 694 697 offenbaren zwar den Einsatz von Aceton als Lösungsmittel für die Polymerisation und auch die Verwendung eines leichten Überschusses der Alkylvinylether-Komponente, jedoch ist aus keiner Stelle dieser beiden Schriften ersichtlich, daß eine Entfernung des Acetons nach vollzogener Polymerisation durch Destillation empfohlen wird.

Aufgabe der Erfindung

Aufgabe der vorliegenden Erfindung ist es, ein Verfahren zur Herstellung benzolfreier Copolymerer aus Maleinsäuremonoalkylestern und Vinylalkylethern zur Verfügung zu stellen.

Gegenstand der Erfindung

Gegenstand der Erfindung ist ein Verfahren zur Herstellung von Copolymerisaten aus Maleinsäuremonoalkylestern und Vinylalkylethern durch radikalische Copolymerisation von Maleinsäureanhydrid und Vinylalkylethern und anschließende Umsetzung mit Alkanol, das dadurch gekennzeichnet ist, daß in jeder Phase der Polymerisation die Vinylalkylether-Komponente im Überschuß im Reaktionsgemisch vorliegt, die radikalische Copolymerisation in Aceton erfolgt und das Aceton während oder nach der Esterbildung bei Temperaturen bis 70°C destillativ entfernt wird.

Beschreibung der Erfindung

Die erfindungsgemäße Herstellung von Copolymerisaten aus Maleinsäurealkylestern und Vinylalkylethern erfolgt wie an sich üblich in zwei Stufen, nämlich der radikalischen Polymerisation von Maleinsäureanhydrid mit dem entsprechenden Vinylether und der Veresterung des gebildeten polymeren Anhydrids mit einem Alkohol. Im Gegensatz zu den bisher üblichen Verfahren verzichtet das erfindungsgemäße Verfahren jedoch auf die Isolierung des polymeren Anhydrids als Feststoff. Es schließt die Veresterung unmittelbar an die Polymerisation an. Als Endprodukt sind im allgemeinen nicht die Copolymerisate aus Maleinsäuremonoalkylester und Alkylvinylether in Substanz, sondern - dem Verwendungszweck angemessen - ihre Lösungen in Alkohol (Ethanol oder Isopropanol) gewünscht. Alkohole sind jedoch wie alle protischen Lösungsmittel nicht als Reaktionsmedium für die Stufe der Polymerisation geeignet, da sie mit dem Maleinsäureanhydrid reagieren. Die hierbei gebildeten Säuregruppen zersetzen den Vinylether, so daß die Polymerisation zum Erliegen kommt. Demnach muß bei der Polymerisation ein anderes Lösungsmittel eingesetzt werden, das indifferent ist und sich vom entsprechenden Alkohol einfach destillativ abtrennen läßt. Geeignet sind hier besonders solche Lösungsmittel, die niedriger als Ethanol sieden. Beispielsweise kommen in Frage Ester wie Methylformiat, Ethylformiat, Methylacetat, Ether wie Dimethylether, Diethylether, Methyltertbutylether, Kohlenwasserstoffe wie Pentan und Ketone wie Aceton. Die genannten Lösungsmittel führen im allgemeinen zu Fällungspolymerisaten mit Ausnahme von Methylacetat und Aceton, die beide zu Polymerlösungen führen. Die Lösungspolymerisation hat im vorliegenden Fall den Vorteil, daß die Polymeren in deutlich höherer Konzentration hergestellt werden können. Methylacetat ist weniger geeignet, da es unter den Bedingungen der auf die Polymerisation folgenden Esterbildung zu Umesterung neigt, wobei einerseits Methanol gebildet wird, das unerwünscht mit dem polymeren Anhydrid reagieren kann, andererseits schwerer flüchtige Acetate höherer Alkohole entstehen, die schwierig zu entfernen sind.

Die genannten Schwierigkeiten werden bei der Verwendung von Aceton umgangen, das sich destillativ leicht von Ethanol oder Isopropanol abtrennen läßt.

Die Verwendung von Aceton als Lösungsmittel für die Polymerisation von Maleinsäureanhydrid mit Vinylalkylethern ist an sich nicht neu. Daß ein Copolymeres aus Maleinsäureanhydrid und Vinylether in Aceton löslich ist, wird bereits in der US-PS 2 047 398 festgestellt. In der GB-PS 712 220 wird ein Verfahren beansprucht, bei dem zu einer Lösung von Maleinsäureanhydrid in einem Lösungsmittel in Gegenwart eines organischen Peroxids ein Vinylether zudosiert wird. Als Lösungsmittel werden u.a. niedere Alkylketone wie Aceton oder Methylethylketon angegeben. In den angegebenen Beispielen wird jedoch ausnahmslos Benzol als Lösungsmittel verwendet.

In der DE-OS 1 770 891 werden u.a. Terpolymere als Maleinsäureanhydrid, Methylvinylether und Laurylvinylether beansprucht sowie ein Verfahren zu ihrer Herstellung, wobei als Lösungsmittel u.a. Aceton genannt ist. Auch hier wird der Vinylether zu der Lösung des Maleinsäureanhydrids in Gegenwart eines Polymerisationskatalysators zudosiert. In den Beispielen werden jedoch ausschließlich Toluol und 1,2-Dichlorethan als Lösungsmittel genannt.

Wenn aufgrund der zitierten Patentveröffentlichungen also als bekannt vorausgesetzt werden kann, daß sich Maleinsäureanhydrid mit Vinylethern in Aceton copolymerisieren läßt, so wird man dennoch über das Ergebnis enttäuscht sein, wenn man versucht, die Polymerisation beispielsweise wie in Beispiel 1 der GB-PS 712 220 durchzuführen, nur mit Aceton statt Benzol als Lösungsmittel oder analog zu Beispiel 5 der DE-OS 1 770 891 nur mit Aceton statt Toluol als Lösungsmittel. Man stellt nämlich fest, daß unter diesen Reaktionsbedingungen ein beträchtlicher Teil des Maleinsäureanhydrids unreagiert zurückbleibt.

Überraschend wurde nämlich festgestellt, daß ein vollständiger Umsatz des Maleinsäureanhydrid nur erzielt wird, wenn in jeder Phase der Polymerisation der Vinylether im Überschuß im Reaktionsgemisch vorliegt. Der gesamte Überschuß des Vinylethers kann bis zu 15 Mol.% betragen. Bevorzugt ist ein Überschuß bis zu 10 Mol.%. Unter diesen Bedingungen ist überraschend der Wassergehalt von technischem Aceton, der etwa 0,3 Gew.% beträgt, nicht störend. Die Polymerisation kann bei der Siedetemperatur des Gemisches erfolgen, jedoch ist auch hierbei, selbst wenn ein ständiger Überschuß des Vinylethers vorliegt, die Ausbeute an Polymer nicht optimal. Das beste Ergebnis wird erzielt, wenn die Polymerisation unter Druck erfolgt. Die Temperatur sollte hierbei zwischen 50 und 100°C liegen, bevorzugt ist ein Bereich von 55 bis 75°C. Der Druck liegt hierbei bei etwa 1 bis 3 bar. Beim Arbeiten unter Druck ist es nicht sinnvoll, das Reaktionsgefäß mit der Gesamtmenge der Monomeren zu befüllen, da so die Reaktion leicht außer Kontrolle gerät. Zweckmäßigerweise wird ein kleiner Teil der Monomeren vorgelegt und der Rest innerhalb mehrerer Stunden zudosiert. Das Maleinsäureanhydrid kann hierbei in flüssiger Form dosiert werden oder als Lösung in Aceton zugegeben werden. Der Vinylalkylether wird in flüssiger Form zugegeben, wobei im Falle von Methylvinylether eine Einleitung unterhalb der Oberfläche des Reaktionsgemisches zweckmäßiger ist als eine Einleitung in die Gasphase.

Als Polymerisationsinitiatoren kommen insbesondere Azoverbindungen in Frage wie 2,2'-Azobis(isobutyronitril), 2,2'-Azobis-(2,4-dimethylvaleronitril), 2,2'-Azobis(4-methoxy-2,4-dimethyl-valeronitril), 1,1'-Azobis(1-cyclohexancarbonitril), Dimethyl-2,2'-azobis(isobutyrat). Besonders bevorzugt ist 2,2'-Azobis-(2,4-dimethylvaleronitril). Peroxy-Gruppen enthaltende Initiatoren sind im allgemeinen weniger geeignet, da mit ihnen, z.B. mit tert.-Butylperpivalat, nur schwer ein unmittelbares und gleichmäßiges Einsetzen der Polymerisation zu erreichen ist.

Die Konzentration des gebildeten Polymeren kann je nach Molekulargewicht und Struktur bis zu 70 Gew.% betragen. Bevorzugt ist ein Bereich von 25 bis 55 Gew.% .

Geeignete Vinylalkylether sind insbesondere Methylvinylether, Ethylvinylether, Butylvinylether, Isobutylvinylether, 2-Ethylhexylvinylether, Dodecylvinylether und Octadecylvinylether. Ganz besonders bevorzugt ist Methylvinylether. Es können auch Mischungen verschiedener Vinylalkylether eingesetzt werden.

Nach Ende der Polymerisation wird zweckmäßigerweise ein Teil des Acetons abdestilliert, wobei bei Verwendung niedrig siedender Vinylalkylether auch der eingesetzte Vinylether-Überschuß mitentfernt wird. Je nach Struktur und Molekulargewicht des Polymeren kann bis zu einer Konzentration von 80 Gew.% eingeengt werden, vorzugsweise auf 50 bis 70 Gew.%.

Das Abdestillieren kann bei Normaldruck oder unter Vakuum erfolgen, wobei in jedem Fall die thermische Belastung des Produktes so gering wie möglich gehalten werden muß. Zu der hochviskosen Lösung wird nun das Alkanol zugegeben, mit dem eine Esterbildung erfolgen soll. Bevorzugt sind hier niedrige Alkanole mit 1 bis 4 Kohlenstoffatomen, insbesondere Ethanol, Isopropanol und n-Butanol. Soll der gleiche Alkohol später auch als Lösungsmittel im Endprodukt dienen, so kann ein kräftiger Überschuß des Alkohols von 100 % oder mehr zugegeben werden. Soll der Alkohol jedoch nur zur Veresterung und nicht als Lösungsmittel dienen, so ist ein großer Überschuß zu vermeiden. In diesem Fall ist ein Überschuß des Alkohols von bis zu 5 Mol.% bezogen auf die Anhydridgruppen bevorzugt.

Das polymere Anhydrid ist beispielsweise in Ethanol nicht löslich. Bei Zugabe von Ethanol bildet sich daher aus der acetonischen Lösung des Anhydrids eine zähe heterogene Masse, die erst im Zuge der Veresterung homogen und klar wird.

Zur Veresterung an sich ist zu sagen, daß sie zweckmäßigerweise in Gegenwart eines einschlägig üblichen Katalysators erfolgt, insbesondere eines sauren Katalysators - als welcher besonders geeignet ist z.B. Schwefelsäure oder Toluolsulfonsäure.

Die Zugabe des Alkohols erfolgt zweckmäßigerweise bei Temperaturen von 50 bis 70°C. Erfindungsgemäß kann nun, falls der gleiche Alkohol später auch als Lösungsmittel dient, mit der destillativen Entfernung des Acetons begonnen werden, auch wenn die Veresterung noch nicht abgeschlossen ist. Außerordentlich wichtig für die Farbe des Endproduktes ist die Temperaturführung auf dieser Stufe. Erfindungsgemäß darf jetzt das Reaktionsgemisch eine Temperatur von 70°C nicht überschreiten. Dies wird dadurch erreicht, daß unter schwachem Vakuum, beispielsweise bei einem Unterdruck von 500 mbar destilliert wird. Um Alkoholverluste zu vermeiden, ist es hierbei zweckmäßig, eine Kolonne zu benutzen. In das Reaktionsgemisch wird Alkohol zugegeben, um einen zu starken Anstieg der Viskosität zu vermeiden. Diese Zugabe kann kontinuierlich oder je nach Bedarf absatzweise erfolgen. Ist das Aceton größtenteils entfernt, beispielsweise zu einem Restgehalt von weniger als 2 %, vorzugsweise weniger als 1 %, kann die Temperatur unbedenklich erhöht werden, z.B. auf 80 bis 100°C, um die Veresterung zu vervollständigen. Eine Farbverschlechterung aufgrund der hohen Temperatur tritt jetzt nicht mehr ein. Nach beendeter Umsetzung kann der Polymergehalt der Lösung durch Zugabe von Alkohol auf den gewünschten Wert eingestellt werden.

Ist der Alkanol, mit dem verestert wird, nicht der gleiche, der auch als Lösungsmittel dienen soll, so wird nach Zugabe des Veresterungsalkohols zunächst bis zur vollständigen Veresterung gerührt und erst dann wie oben beschrieben mit der Destillation begonnen.

Die nach dem geschilderten Verfahren hergestellten Lösungen sind nur schwach gelb gefärbt. Eine weitere Farbaufhellung, falls erwünscht und notwendig, kann durch Behandlung mit geringen Mengen Wasserstoffperoxid erfolgen.

Die nach dem erfindungsgemäßen Verfahren erhaltenen alkoholischen Lösungen von Copolyme-risaten aus Maleinsäuremonoalkylestern und Viny-lalkylethern sind den entsprechenden nach dem oben beschriebenen Stand der Technik erhaltenen in den physikalischen und anwendungstechnischen Eigenschaften völlig ebenbürtig. Sie unterscheiden sich dadurch, daß sie kein Benzol, sondern geringe Mengen unbedenkliches Aceton enthalten.

Alle im folgenden angegebenen K-Werte wurden bei einer Konzentration von 1 g/100 ml in Cyclohexanon bei 25°C nach Fikentscher bestimmt.

Beispiel 1

Ein 220 l-Stahlrührbehälter, der mit Dosiervor-richtungen und automatischer Innentemperatur-steuerung ausgestattet war, wurde durch Spülen mit Stickstoff sauerstofffrei gemacht. Dann wurden 7 l Aceton vorgelegt. Von einer Lösung von 20 kg Maleinsäureanhydrid in 28 kg Aceton, die als Zulauf 1 diente, wurden 3 l zugegeben. Zulauf 2 bestand aus 17,6 l Vinylmethylether. Hiervon wurden 1 l zugegeben. Danach wurde die Vorlage unter Druck auf 65°C aufgeheizt. Bei 60°C wurde 1 l Zulauf 3 zugegeben, der aus 300 g 2,2'-Azobis-(2,4-dimethylvaleronitril) in 6 kg Aceton bestand. Es wurde 15 min bei 65°C anpolymerisiert und dann bei dieser Innentemperatur Zulauf 1 und Zulauf 2 in 4 h, Zulauf 3 in 6 h zugefahren. Aufgrund der exothermen Reaktion lag in den ersten 4 Stunden die Badtemperatur immer um ca. 5°C niedriger als die Innentemperatur. Der Druck lag ständig bei ca. 2 bar. Nach Ende der Polymerisation wurde vorsichtig entspannt und bei Normaldruck ca. 15 l Aceton abdestilliert. Man erhielt eine nahezu farblose Polymerlösung mit einem Festgehalt von 64,3 %. Der K-Wert des Polymeren betrug 41,2. Der Gehalt der Lösung an monomerem Maleinsäureanhydrid betrug 0,4 Gew.%.

Zu dieser Polymerlösung wurden bei 56°C innerhalb von 1 h 40 g p-Toluolsulfonsäure in 20 l Ethanol zugegeben, wobei eine zähe breiige heterogene Masse entstand, die im Verlauf von 4 h Rühren bei dieser Temperatur langsam homogener wurde. Nach diesen 4 h wurde begonnen, bei einem Unterdruck von 500 mbar abzudestillieren, wobei immer dann, wenn die Grenze der Rührbarkeit erreicht war, 10 l Ethanol zugesetzt wurden (insgesamt 6 mal). Die Innentemperatur wurde bei 50 bis 55°C gehalten. Insgesamt wurden 90 l Aceton-Ethanol-Gemisch abdestilliert. Nach Ende der Destillation wurde 2 h unter Druck auf 100°C erhitzt. Nach dem Abkühlen wurde der Feststoffgehalt der Lösung mit Ethanol auf 50 % eingestellt. Das erhaltene Polymere hatte einen K-Wert von 37,9. Die Säurezahl betrug 154 mg KOH/g. Die Lösung enthielt noch 1 % Aceton. Sie war nur ganz schwach gelblich gefärbt und hatte eine Farbzahl von 1 auf der Jodskala.

Beispiel 2

Ein 220 l-Stahlrührbehälter, der mit Dosiervorrichtungen und automatischer Innentemperatursteuerung ausgestattet war, wurde durch Spülen mit Stickstoff sauerstofffrei gemacht. Dann wurden 5 l Aceton vorgelegt. Von einer Lösung von 20 kg Maleinsäureanhydrid in 25 kg Aceton, die als Zulauf 1 diente, wurden 3 l zugegeben. Zulauf 2 bestand aus 17,6 l Vinylmethylether. Hiervon wurden 1 l zugegeben. Danach wurde die Vorlage unter Druck auf 65°C aufgeheizt. Bei 60°C wurde 1 l Zulauf 3 zugegeben, der aus 300 g 2,2'-Azobis-(2,4-dimethylvaleronitril) in 6 kg Aceton bestand. Es wurde 15 min bei 65°C anpolymerisiert und dann bei dieser Innentemperatur Zulauf 1 und Zulauf 2 in 4 h, Zulauf 3 in 6 h zugefahren. Aufgrund der exothermen Reaktion lag in den ersten 4 Stunden die Badtemperatur immer um ca. 5°C niedriger als die Innentemperatur. Der Druck lag ständig bei ca. 2 bar. Nach Ende der Polymerisation wurde vorsichtig entspannt und bei Normaldruck ca. 15 l Aceton abdestilliert. Man erhielt eine Polymerlösung mit einem schwachen Rosastich und einem Feststoffgehalt von 57,9 %. Der K-Wert des Polymeren betrug 54,1. Der Gehalt der Lösung an monomerem Maleinsäureanhydrid betrug 0,06 Gew.%.

Zu dieser Polymerlösung wurden innerhalb von 30 min bei 56°C 15,9 kg n-Butanol und 40 g p-Toluolsulfonsäure gegeben. Dann wurde unter Druck 4 h auf 110°C erhitzt. Nach dem Abkühlen auf 60°C wurde bei ca. 500 mbar Unterdruck Aceton abdestilliert und nach Bedarf Ethanol in 10 l Portionen zugegeben, so daß die Mischung stets rührbar blieb. Insgesamt wurden 70 l Aceton-Ethanol-Gemisch abdestilliert, wobei die Temperatur in der Lösung zwischen 50 und 55°C lag. Anschließend wurden 1,2 kg 30 %iges Wasserstoffperoxid zugegeben und 2 h unter Druck auf 90°C erhitzt. Nach dem Abkühlen wurde der Feststoffgehalt mit Ethanol auf 50 % gestellt. Das erhaltene Polymere hatte einen K-Wert von 48,6. Die Säurezahl der Lösung betrug 125 mg KOH/g. Die Lösung enthielt 5,2 % Butanol und 1,9 % Aceton. Die Lösung war schwach gelblich gefärbt mit einer Farbzahl von 1 bis 2 auf der Jodfarbskala.

Beispiel 3

Ein 220 l-Stahlrührbehälter, der mit Dosiervorrichtungen und automatischer Innentemperatursteuerung ausgestattet war, wurde durch Spülen mit Stickstoff sauerstofffrei gemacht. Dann wurden 7 l Aceton vorgelegt. Von einer Lösung von 20 kg Maleinsäureanhydrid in 28 kg Aceton, die als Zulauf 1 diente, wurden 3 l zugegeben. Zulauf 2 bestand aus 17,6 l Vinylmethylether. Hiervon wurden 1 l zugegeben. Danach wurde die Vorlage unter Druck auf 65°C aufgeheizt. Bei 60°C wurde 1 l Zulauf 3 zugegeben, der aus 300 g 2,2'-Azobis-(2,4-dimethylvaleronitril) in 6 kg Aceton bestand. Es wurde 15 min bei 65°C anpolymerisiert und dann bei dieser Innentemperatur Zulauf 1 und Zulauf 2 in 4 h, Zulauf 3 in 6 h zugefahren. Aufgrund der exothermen Reaktion lag in den ersten 4 Stunden die Badtemperatur immer um ca. 5°C niedriger als die Innentemperatur. Der Druck lag ständig bei ca. 2 bar. Nach Ende der Polymerisation wurde vorsichtig entspannt und bei Normaldruck ca. 15 l Aceton abdestilliert. Man erhielt eine fast farblose viskose Polymerlösung mit einem Feststoffgehalt von 60,4 %. Der K-Wert des Polymeren betrug 40,8. Der Gehalt der Lösung an monomerem Maleinsäureanhydrid betrug 0,045 Gew.%.

Zu dieser Polymerlösung wurden innerhalb von 30 min 40 g Schwefelsäure, gelöst in 25 l Isopropanol, zugegeben, wobei eine zähe heterogene Masse entstand, die 4 h bei einer Temperatur von 60°C gerührt wurde. Nach diesen 4 h wurde begonnen, bei einem Unterdruck von 500 mbar abzudestillieren, wobei immer dann, wenn die Grenze der Rührbarkeit erreicht war, 10 l-Portionen Isopropanol zugesetzt wurden; die Innentemperatur wurde dabei zwischen 55 und 60°C gehalten. Insgesamt wurden 65 l Aceton-Isopropanol-Gemisch abdestilliert. Nach Ende der Destillation wurden 500 g 50 %iges Wasserstoffperoxid zugegeben und 2 h unter Druck auf 100°C erhitzt. Nach dem Abkühlen erhielt man eine klare, leicht gelbliche viskose Lösung mit einem Polymergehalt von 54,1 Gew.% und einer Säurezahl von 156 mg KOH/g. Das erhaltene Polymere hatte einen K-Wert von 41,2. Die Lösung hatte eine Farbzahl von 2 bis 3 auf der Jodskala.

Beispiel 4

In einem 1 l-Glasrührbehälter, der mit Rührer, Rückflußkühler und Dosiervorrichtungen versehen war, wurden 100 g Aceton vorgelegt. Aus 120 g Maleinsäureanhydrid und 150 g Aceton wurde eine Lösung bereitet, die als Zulauf 1 diente. Eine Lösung von 1,8 g 2,2′-Azobis(2,4-dimethylvaleronitril) in 97 g Vinylethylether diente als Zulauf 2. Von Zulauf 1 wurden 50 ml, von Zulauf 2 30 ml in die Vorlage gegeben und dann zum Sieden erwärmt. Nach 10 min Sieden wurden Zulauf 1 und Zulauf 2 parallel innerhalb 3 Stunden zudosiert, wobei ständig am leichten Sieden gehalten wurde. Nach beendeter Zugabe wurde eine Lösung von 0,3 g 2,2′-Azobis(2,4-dimethylvaleronitril) in 25 g Aceton innerhalb einer Stunde zugegeben und anschließend noch 1 Stunde gerührt, alles bei leichtem Sieden. Hiernach wurden 40 ml Lösungsmittel abdestilliert. Man erhielt eine klare hellgelbe viskose Lösung mit einem Polymergehalt von 44,5 Gew.%. Der Gehalt der Lösung an monomerem Maleinsäureanhydrid betrug 0,2 Gew.%.

Zu dieser Lösung wurden innerhalb von 30 min 0,2 g p-Toluolsulfonsäure, gelöst in 130 g Ethanol, gegeben und 4 Stunden bei 65°C gerührt. Dann wurde bei einem Unterdruck von 500 mbar Lösungsmittel abdestilliert, wobei nach und nach 200 g Ethanol in 5 Portionen zugegeben wurden, um die Mischung rührbar zu halten. Insgesamt wurden 270 g Lösungsmittel abdestilliert. Nach Ende der Destillation wurden 6 g einer 30 %igen Wasserstoffperoxid-Lösung zugegeben und 3 h zum Sieden erhitzt. Man erhielt eine schwach gelb gefärbte viskose Lösung mit einem Polymergehalt von 48,3 Gew.% und einer Säurezahl von 132 mg KOH/g. Der K-Wert des Polymeren betrug 49,5. Die Farbzahl der Lösung auf der Jodskala war 2.

Vergleichsbeispiel 1

In einem 1 l-Glasrührkolben, der mit Rührer, einem auf -15°C gekühlten Rückflußkühler, 2 Tropftrichtern, von denen einer auf -15°C gekühlt war, und Thermometer ausgestattet war, wurden 250 g Aceton und 100 g Maleinsäureanhydrid vorgelegt. In den gekühlten Tropftrichter wurden 80 ml Vinylmethylether kondensiert. In den anderen Tropftrichter wurde eine Lösung von 1,2 g 2,2′-Azobis-(2,4-dimethylvaleronitril) in 100 ml Aceton gegeben. Die Vorlage wurde auf 56°C erwärmt. Dann wurden 5 ml Vinylmethylether und 10 ml Initiatorlösung zugegeben und 15 min gerührt. Danach wurden der restliche Vinylmethylether innerhalb 6 h, die restliche Initiatorlösung innerhalb von 8 h zudosiert, wobei die Innentemperatur bei 60 bis 62°C gehalten wurde. Nach Ende der Zugabe wurde noch 2 h bei der gleichen Temperatur gerührt. Man erhielt eine viskose, braun gefärbte Lösung mit einem Feststoffgehalt von 33 %. Der K-Wert des Polymeren betrug 26,4. Der Gehalt der Lösung an monomerem Maleinsäureanhydrid betrug 6,3.

Zu dieser Lösung wurden 0,2 g p-Toluolsulfonsäure, gelöst in 100 ml Ethanol, gegeben. Die entstandene zähe, heterogene Masse wurde zum Sieden erhitzt und solange Lösungsmittel abdestilliert, bis die Übergangstemperatur auf 78°C angestiegen war. Jedesmal, wenn hierbei die Grenze der Rührbarkeit erreicht war, wurden 50 ml Ethanol zugegeben, insgesamt 350 ml. Anschließend wurde noch 4 Stunden am Rückfluß erhitzt. Man erhielt eine klare viskose Polymerlösung mit einem Polymergehalt von 53,5 Gew.%. Der K-Wert des Polymeren betrug 22. Die Lösung war stark verfärbt mit einer Farbzahl 25 auf der Jodskala. Es wurden 4 g 50 %ige Wasserstoffperoxidlösung zugegeben und weitere 2 Stunden zum Sieden erhitzt. Hiernach war die Lösung kräftig gelb mit einer Farbzahl 7 auf der Jodskala.

Vergleichsbeispiel 2

In einer wie in Vergleichsbeispiel 1 ausgestatteten Apparatur wurden 210 g Aceton vorgelegt. Als Zulauf 1 diente eine Lösung von 100 g Maleinsäureanhydrid in 40 g Aceton. Zulauf 2 waren 80 ml Vinylmethylether, Zulauf 3 eine Lösung von 1,2 g 2,2′-Azobis(2,4-dimethylvaleronitril) in 80 g Aceton. Die Vorlage wurde auf 56°C erwärmt. Dann wurden nacheinander 25 ml Zulauf 1, 15 ml Zulauf 2 und 10 ml Zulauf 3 zugegeben und 15 min bei 56°C gerührt. Anschließend wurden Zulauf 1 und Zulauf 2 in 4 h, Zulauf 3 in 8 h zudosiert. Die Innentemperatur wurde auf 56°C gehalten, wobei die Brüdetemperatur zeitweise bis auf 43°C abfiel und dann wieder auf 56°C anstieg. Es wurden noch 2 h bei dieser Temperatur nachgerührt. Man erhielt eine viskose, rötliche Polymerlösung mit einem Feststoffgehalt von 33,2 %. Der K-Wert des Polymeren betrug 48,8. Der Gehalt der Lösung an monomerem Maleinsäureanhydrid war 3,0.

Zu dieser Lösung wurden 0,4 g Schwefelsäure und 100 ml Ethanol gegeben. Es entstand eine viskose heterogene Masse, die zum Sieden erhitzt wurde. Es wurde solange Lösungsmittel abdestilliert, bis eine Übergangstemperatur von 78°C erreicht war. Während der Destillation wurde insgesamt viermal 100 ml Ethanol zugegeben, um die Mischung rührbar zu halten. Anschließend wurde noch 4 h unter Rückfluß erhitzt. Man erhielt eine klare viskose Lösung mit einem Polymergehalt von 46,8 Gew.%. Der K-Wert des Polymeren betrug 43,2. Die Lösung war stark gefärbt und wies eine Farbzahl 20 auf der Jodskala auf. Es wurden 4 g 50 %ige Wasserstoffperoxid-Lösung zugegeben und weitere 2 Stunden zum Sieden erhitzt. Hiernach war die Lösung weniger intensiv gelb gefärbt mit einer Farbzahl 6 auf der Jodskala.

Vergleichsbeispiel 3

Ein 220 l-Stahlrührbehälter, der mit Dosiervorrichtungen und automatischer Innentemperatursteuerung ausgestattet war, wurde durch Spülen mit Stickstoff sauerstofffrei gemacht. Dann wurden 7 l Aceton vorgelegt. Von einer Lösung von 20 kg Maleinsäureanhydrid in 28 kg Aceton, die als Zulauf 1 diente, wurden 3 l zugegeben. Zulauf 2 bestand aus 17,6 l Vinylmethylether. Hiervon wurden 1 l zugegeben. Danach wurde die Vorlage unter Druck auf 65°C aufgeheizt. Bei 60°C wurde 1 l Zulauf 3 zugegeben, der aus 300 g 2,2'-Azobis-(2,4-dimethylvaleronitril) in 6 kg Aceton bestand. Es wurde 15 min bei 65°C anpolymerisiert und dann bei dieser Innentemperatur Zulauf 1 und Zulauf 2 in 4 h, Zulauf 3 in 6 h zugefahren. Aufgrund der exothermen Reaktion lag in den ersten 4 Stunden die Badtemperatur immer um ca. 5°C niedriger als die Innentemperatur. Der Druck lag ständig bei ca. 2 bar. Nach Ende der Polymerisation wurde vorsichtig entspannt und bei Normaldruck ca. 15 l Aceton abdestilliert. Man erhielt eine leicht rötliche Polymerlösung mit einem Feststoffgehalt von 61,8 %. Der K-Wert des Polymeren betrug 42,6. Der Gehalt der Lösung an monomerem Maleinsäureanhydrid betrug 0,5 Gew.%.

Diese Polymerlösung wurde unter Druck auf 100°C aufgeheizt, wonach bei dieser Temperatur eine Lösung von 40 g p-Toluolsulfonsäure in 20 l Ethanol zugegeben und 4 h bei der gleichen Temperatur gerührt wurde. Nach diesen 4 h wurde auf ca. 65°C abgekühlt, entspannt und bei Normaldruck abdestilliert, bis eine Übergangstemperatur von 78°C erreicht war. Immer dann, wenn die Grenze der Rührbarkeit erreicht war, wurden 10 l Ethanol zugesetzt (insgesamt 6 mal). Nach Ende der Destillation wurden 600 g 30 %iges Wasserstoffperoxid zugegeben und 2 h unter Druck auf 100°C erhitzt. Nach dem Abkühlen wurde der Feststoffgehalt der Lösung mit Ethanol auf 50 % eingestellt. Das erhaltene Polymere hatte einen K-Wert von 36,2. Die Säurezahl der Lösung betrug 137 mg KOH/g. Die Lösung enthielt noch 2,0 % Aceton; sie war stark gelb gefärbt und hatte eine Farbzahl von 7 auf der Jodskala.

Die Beispiele 1 bis 4 illustrieren den Einfluß des erfindungsgemäßen Vorgehens auf den Umsatz bei der Polymerisation und die Farbqualität des Endproduktes und demonstrieren die Überlegenheit des erfindungsgemäßen Verfahrens.

In den Vergleichsbeispielen 1 bis 3 wird gezeigt, daß nicht erfindungsgemäßes Vorgehen bei Polymerisation oder Veresterung zu schlechterem Umsatz und stark verminderter Farbqualität führt.

**Patentansprüche**

1. Verfahren zur Herstellung von Copolymerisaten aus Maleinsäuremonoalkylestern und Vinylalkylethern durch radikalische Copolymerisation von Maleinsäureanhydrid und Vinylalkylethern und anschließende Umsetzung mit Alkanol, dadurch gekennzeichnet, daß in jeder Phase der Polymerisation die Vinylalkylether-Komponente im Überschuß im Reaktionsgemisch vorliegt, die radikalische Copolymerisation in Aceton durchgeführt wird und das Aceton während oder nach der Esterbildung bei Temperaturen bis zu 70°C destillativ entfernt wird.

2. Verfahren nach Anspruch 1, dadurch gekennzeichnet, daß die Copolymerisation unter Druck bei Temperaturen zwischen 50 und 100°C durchgeführt wird.

3. Verfahren nach Anspruch 1 und 2, dadurch gekennzeichnet, daß als Radikalbildner eine Azoverbindung verwendet wird.

4. Verfahren nach Anspruch 3, dadurch gekennzeichnet, daß als Radikalbildner 2,2'-Azobis-(2,4-dimethylvaleronitril) verwendet wird.

5. Verfahren nach Anspruch 1 bis 4, dadurch gekennzeichnet, daß das Aceton unter Vakuum entfernt wird.

6. Verfahren nach Anspruch 1 bis 5, dadurch gekennzeichnet, daß der Alkylvinylether Methylvinylether ist.

7. Verfahren nach Anspruch 1 bis 6, dadurch gekennzeichnet, daß der Alkanol ein Niedrigalkanol mit 1 bis 4 Kohlenstoffatomen ist.

8. Verfahren nach Anspruch 1 bis 7, dadurch gekennzeichnet, daß der Alkanol Ethanol oder n-Butanol ist.

## Claims

1. A process for the preparation of a copolymer of a monoalkyl maleate and a vinyl alkyl ether by free radical copolymerization of maleic anhydride and a vinyl alkyl ether followed by reaction with an alkanol, wherein the vinyl alkyl ether component is present in excess in the reaction mixture in each phase of the polymerization, the free radical copolymerization is carried out in acetone and the acetone is removed by distillation during or after ester formation at up to 70°C.

2. A process as claimed in claim 1, wherein the copolymerization is carried out under superatmospheric pressure at from 50 to 100°C.

3. A process as claimed in claim 1 or 2, wherein the free radical initiator used is an azo compound.

4. A process as claimed in claim 3, wherein the free radical initiator used is 2,2'-azobis-(2,4-dimethylvaleronitrile).

5. A process as claimed in any of claims 1 to 4, wherein the acetone is removed under reduced pressure.

6. A process as claimed in any of claims 1 to 5, wherein the alkyl vinyl ether is methyl vinyl ether.

7. A process as claimed in any of claims 1 to 6, wherein the alkanol is a lower alkanol of 1 to 4 carbon atoms.

8. A process as claimed in any of claims 1 to 7, wherein the alkanol is ethanol or n-butanol.

## Revendications

1. Procédé de fabrication de copolymères constitués de monomaléates d'alkyle et d'éthers vinylalkyliques, par la copolymérisation radicalaire de l'anhydride maléique et d'éthers vinylalkyliques et réaction subséquente avec un alcanol, caractérisé en ce qu'au cours de chaque phase de la polymérisation, le composant du type éther vinylalkylique est présent en excès dans le mélange réactionnel, on entreprend la copolymérisation radicalaire dans l'acétone et on chasse l'acétone par distillation à des températures allant jusqu'à 70°C, pendant ou après la formation de l'ester.

2. Procédé suivant la revendication 1, caractérisé en ce que l'on entreprend la copolymérisation à des températures variant de 50 à 100°C et sous pression.

3. Procédé suivant l'une quelconque des revendications 1 et 2, caractérisé en ce que l'on utilise un composé du type azo à titre d'agent formateur de radicaux.

4. Procédé suivant la revendication 3, caractérisé en ce que l'on utilise le 2,2'-azobis(2,4-diméthylvaléronitrile) à titre d'agent formateur de radicaux.

5. Composé suivant l'une quelconque des revendications 1 à 4, caractérisé en ce que l'on chasse l'acétone sous vide.

6. Procédé suivant l'une quelconque des revendications 1 à 5, caractérisé en ce que l'éther alkylvinylique est l'éther méthylvinylique.

7. Procédé suivant l'une quelconque des revendications 1 à 6, caractérisé en ce que l'alcanol est un alcanol inférieur comportant de 1 à 4 atomes de carbone.

8. Procédé suivant la revendication 7, caractérisé en ce que l'alcanol est l'éthanol ou le n-butanol.